# EUROPÄISCHE PATENTSCHRIFT

(11) **EP 0 977 328 B1**
(45) Veröffentlichungstag und Bekanntmachung des Hinweises auf die Patenterteilung: **13.02.2008**
(21) Anmeldenummer: 99114769.5
(22) Anmeldetag: 28.07.1999
(51) Int. Cl.: H01S 3/109

(54) **Rauscharmer frequenzvervielfachter Laser mit Strahlseparator**
Low noise frequency multiplying laser with beam separator
Laser à faible bruit à multiplication de fréquence avec séparateur de faisceaux

(30) Priorität: 29.07.1998 DE 19834202
(43) Veröffentlichungstag der Anmeldung: 02.02.2000
(73) Patentinhaber: Coherent Lübeck GmbH, 23569 Lübeck (DE)
(72) Erfinder: Seelert, Wolf, Dr., 23560 Lübeck (DE); Ostroumov, Vasiliy, Dr., 23558 Lübeck (DE)
(74) Vertreter: Klunker . Schmitt-Nilson . Hirsch

(56) Entgegenhaltungen:
- EP-A- 0 587 330
- EP-A- 0 596 714
- US-A- 3 865 380
- US-A- 5 761 227
- PATENT ABSTRACTS OF JAPAN vol. 015, no. 379 (E-1115), 25. September 1991 (1991-09-25) & JP 03 150887 A (TOSHIBA CORP), 27. Juni 1991 (1991-06-27)

## Beschreibung

Die Erfindung betrifft einen Laser bestehend aus einer Pumpquelle und einem Resonator mit einer optischen Achse längs der mindestens ein erster Spiegel, ein Lasermedium zur Erzeugung eines primären Laserstrahls, ein nichtlinearer Kristall zur Erzeugung eines frequenzvervielfachten Strahls und ein zweiter, als Auskoppelspiegel dienenden Spiegel hintereinander angeordnet sind.

Ein Laser der beschriebenen Art dient dazu, aus Laserlicht mit einer Grundwellenlänge (im folgenden primärer Laserstrahl genannt) durch nichtlineare Effekte beim Durchgang des Laserlichts durch einen nichtlinearen Kristall Laserlicht mit der doppelten Frequenz oder höheren Vielfachen der Frequenz des primären Laserstrahls zu erzeugen (im folgenden frequenzvervielfachter Strahl genannt). So kann z.B. aus infrarotem Laserlicht grünes Laserlicht erzeugt werden.

Bei einem Laser üblicher Bauart besteht der primäre Laserstrahl aus ca. 5 bis 20 longitudinalen Moden (sehr eng beieinander liegende Schwingungsfrequenzen des Lasers). Wird bei einem solchen Laser innerhalb des Resonators ein nichtlinearer Kristall angeordnet, so kommt es zu starkem Rauschen der Amplitude (mit bis zu 100% Modulationstiefe) des damit erzeugten frequenzvervielfachten Strahls.

Das beschriebene Rauschen hat hauptsächlich vier Quellen: Zu einem Teil entsteht das Rauschen durch Wechselwirkung von frequenzvervielfachtem Laserlicht, das der in die eine Richtung laufende primäre Laserstrahl erzeugt, mit frequenzvervielfachtem Laserlicht, das der nach der Reflexion an dem Auskoppelspiegel in die andere Richtung laufende primäre Laserstrahl erzeugt. Diese Wechselwirkung führt zu Interferenzen und stehenden Wellen und wird im folgenden "erste Rauschquelle" genannt.

Eine zweite Quelle für Rauschen bzw. Pulsen des Lasers ist die Wechselwirkung des primären Laserstrahls mit dem Anteil des frequenzvervielfachten Strahls, der beim Durchgang durch den nichtlinearen Kristall in Laserlicht der Grundwellenlänge zurückkonvertiert worden ist. Diese Wechselwirkung kann den Laser auf seiner primären Schwingungsfrequenz deutlich beeinflussen und zu starken chaotischen Fluktuationen führen (siehe z.B. M. Tsunekane et. al.: Elemination of chaos in a multilongitudinal-mode, diode pumped, 6W intracavity doubled Nd:YAG laser"; Opt. Lett., Vol. 22, No. 13 (Jul. 1997)). Dieser Beitrag zum Rauschen wird im folgenden "zweite Rauschquelle" genannt.

Der Auskoppelspiegel ist nicht hundertprozentig transparent für den frequenzvervielfachten Strahl. Der daher am Auskoppelspiegel reflektierte Anteil des frequenzvervielfachten Strahls kann mit dem ursprünglichen frequenzvervielfachten Strahl interferieren und so zum Rauschen des Lasers beitragen ("dritte Rauschquelle").

In dem nichtlinearen Kristall treten unterschiedliche longitudinale Moden miteinander durch Summen- und Differenzfrequenz-Bildung in Wechselwirkung, so daß es hier zu chaotischen Leistungsfluktuationen kommen kann. Bei einem linear aufgebauten Laser mit stehender- Welle (standing wave oscillator) wird dieser Effekt durch sogenannte "spatial holes" (restliche Verstärkung im aktiven Lasermedium, die in den Schwingungsknoten der jeweiligen oszillierenden Mode verbleibt) zusätzlich unterstützt; siehe hierzu z.B. T. Baer: Large amplitude fluctiations due to longitudinal mode coupling in diode pumped intracavity doubled Nd:YAG lasers; J. Opt. Soc. Am. B, Vol.3, No. 9, 1175-1180 (Sept. 1986). Die eben beschriebenen Effekte werden im folgenden als "vierte Rauschquelle" bezeichnet. Durch Auswahl einer geeigneten Modenverteilung kann diese rauschquelle reduziert werden (siehe US 5,627,849).

Zur Vermeidung oder Verminderung der Auswirkungen dieser vierten Rauschquelle kann ein longitudinaler Einmodenbetrieb (single frequency) als Ringlaseroszillator (US 5, 052, 815) oder als "standing wave oscillator" mit einem eingefügten frequenzselektierenden Bauteil wie z.B. einem Etalon gewählt werden, so daß eine nichtlineare Koppelung longitudinaler Moden von vornherein ausgeschlossen wird. Alternativ kann das Rauschen auch auf sehr viele Moden (ca. 100) verteilt werden, so daß die Modulationstiefe des Rauschens weniger stark ausgeprägt ist (US 5, 446, 749). Hierzu muß ein Laser mit einem sehr langen Resonator verwendet werden.

Bisher wurden die oben genannten vier Rauschquellen nur isoliert bzw. zum Teil gar nicht betrachtet, und Maßnahmen zur Verminderung des Rauschens beschränkten sich im wesentlichen auf die vierte Rauschquelle. Die bekannten Lösungen des Problems haben überdies den Nachteil, daß eine ganz bestimmte Bauart wie z.B. ein Ringlaser nötig ist, daß zusätzliche Bauteile erforderlich sind oder daß der Resonator sehr lang gebaut werden muß und eine aufwendige Temperaturstabilisierung nötig ist.

Aus PATENT ABSTRACTS OF JAPAN Bd. 015, Nr. 379 (E-1115) & JP 03 150887 A ist ein Laser bekannt, bestehend aus einer Pumpquelle und einem Resonator mit einer optischen Achse, längs der mindestens ein erster Spiegel, ein Lasermedium zur Erzeugung eines primären Laserstrahls, ein nichtlinearer Kristall zur Erzeugung eines frequenzvervielfachten Strahls und ein zweiter, als Auskoppelspiegel dienender Spiegel hintereinander angeordnet sind, wobei ein Prisma als Separator zur Trennung des primären Laserstrahls von dem frequenzvervielfachten Strahl zwischen dem nichtlinearen Kristall und einem zweiten hochreflektierenden Spiegel angeordnet ist, von welchem der primäre Laserstrahl in den ursprünglichen optischen Weg zurückgeleitet wird.

Aufgabe der Erfindung ist es, einen Laser der genannten Art anzugeben, bei dem das Rauschen stark reduziert ist, ohne daß es nötig ist, den Laser mit einer einzigen oder mit sehr vielen longitudinalen Moden zu betreiben oder eine bestimmte Modenverteilung vorzugeben.

Diese Aufgabe wird durch die Merkmale des Anspruchs 1 gelöst.

Die Aufgabe wird dadurch gelöst, daß ein Separator zur räumlichen Trennung des primären Laserstrahls von dem frequenzvervielfachten Strahl und/oder zur unterschiedlichen Drehung der Polarisationsrichtung von primärem Laserstrahl und frequenzvervielfachtem Strahl vorgesehen ist.

Die räumliche Trennung des primären Laserstrahls von dem erzeugten frequenzvervielfachten Strahl bedeutet; daß die Mittelpunkte der beiden Strahlquerschnitte deutlich voneinander getrennt sind und sich somit die beiden Strahlquerschnitte nur noch zum Teil oder gar nicht mehr überlappen. Eine Wechselwirkung der beiden Strahlen bzw. der in zwei Richtungen laufenden frequenzvervielfachten Strahlen kann nur in dem Überlappungsbereich stattfinden, die beschriebenen Effekte werden somit vermieden oder zumindest stark vermindert. Eine deutliche Verbesserung der Stabilität des Lasers setzt ein, wenn die Mittelpunkte der beiden Strahlquerschnitte um etwa 25% des Strahldurchmessers des primären Laserstrahls seitlich versetzt sind. Ab etwa 50% Versatz wird eine sehr gute Stabilisierung des Lasers erreicht.

Die räumliche Trennung der beiden Strahlen kann in dem nichtlinearen Kristall durch den sogenannten Walk-off-Effekt oder in einem zusätzlichen Bauteil durch Dispersion oder durch eine Kombination der beiden Effekte erfolgen. Eine unterschiedliche Drehung der Polarisationsrichtung von primärem Laserstrahl und frequenzvervielfachtem Strahl wird durch einen speziellen Polarisationsdreher, der zwischen dem nichtlinearen Kristall und dem Auskoppelspiegel angeordnet wird, erreicht.

Durch den Walk-off-Effekt können die Auswirkungen der ersten und zweiten Rauschquelle stark vermindert werden. Durch Dispersion und/oder die unterschiedliche Drehung der Polarisationsrichtung von primärem Laserstrahl und frequenzvervielfachtem Strahl kann die Auswirkung der dritten Rauschquelle stark vermindert werden.

Zum besseren Verständnis werden im folgenden die Funktion eines nichtlinearen Kristalls bei der Erzeugung eines frequenzvervielfachten Strahls und der Walk-off-Effekt kurz erläutert.

Zur Frequenzvervielfachung von Laserlicht werden sogenannte optisch nichtlineare Kristalle eingesetzt, das sind Kristalle, in denen nichtlineare optische Effekte besonders stark ausgeprägt sind. Wird in solch einen Kristall eine Lichtwelle mit der Frequenz f₁ (primärer Laserstrahl) eingestrahlt, so ergibt sich ein optisch nichtlinearer Anteil der Polarisation im Kristall, der mit der doppelten Frequenz f₂ = 2 f₁ schwingt. Mit dieser Frequenz wird eine Lichtwelle, die zweite Harmonische (frequenzvervielfachter Strahl), abgestrahlt. Um maximale Intensität in Richtung der eingestrahlen Welle zu erreichen, müssen der primäre Laserstrahl und die zweite Harmonische beim Durchlauf durch den Kristall in Phase bleiben. Für diese Phasenanpassung müssen die Brechungsindizes n₁, n₂ der beiden Wellen im Kristall gleich sein, was mit Hilfe von Doppelbrechung erreicht werden kann.

Die aus einem optisch nichtlinearen Kristall austretenden Strahlen (primärer Laserstrahl und zweite Harmonische) können in einen zweiten optisch nichtlinearen Kristall geleitet werden, in dem zum Beispiel durch Mischung zusätzlich die dreifache Frequenz des primären Laserstrahls erzeugt wird. In einem weiteren Kristall kann auch noch durch Mischung der Grundfrequenz und der dritten Harmonischen die vierfache Frequenz des primären Laserstrahls erzeugt werden.

Für die Frequenzvervielfachung werden zwei Typen von Kristallen verwandt, die sich in der Art der Phasenanpassung unterscheiden: Typ-I-Kristalle und Typ-II-Kristalle.

In einem optisch einachsigen Kristall hat der Brechungsindex nₒ für den ordentlichen Strahl einen anderen Wert als der Brechungsindex nₑ für den außerordentlichen Strahl. Als ordentlicher Strahl wird Licht bezeichnet, welches senkrecht zur Hauptschnittebene polarisiert ist, während der außerordentliche Strahl parallel zu der Hauptschnittebene polarisiert ist. Die Hauptschnittebene des Kristalls ist durch die Einfallsrichtung des Lichtstrahles und die optische Achse des Kristalls definiert.

Der primäre Laserstrahl und die zweite Harmonische sind senkrecht zueinander polarisiert. Wird die Polarisationsrichtung des primären Laserstrahls z.B. senkrecht zum Hauptschnitt gelegt, so durchläuft sie den Kristall als ordentlicher Strahl und die zweite Harmonische stellt den außerordentlichen Strahl dar. Der Brechungsindex n_{1,o} für den primären Laserstrahl hat für alle Einstrahlrichtungen in den Kristall den gleichen Wert, hingegen ist der Brechungsindex n_{2,e} für die zweite Harmonische von dem Einstrahlwinkel abhängig. Trägt man in einem Koordinatensystem x, y, z, in dem die z-Achse mit der optischen Achse des Kristalls zusammenfalle, die Werte der Brechungsindizes für alle Einstrahlwinkel auf, so erhält man für den ordentlichen Strahl eine Kugeloberfläche und für den außerordentlichen Strahl die Oberfläche eines Rotationsellipsoids, symmetrisch zum Koordinatenursprung. Bei geeigneten Werten von n_{1,o} und n_{2,e} schneiden sich die beiden Oberflächen in zwei Kreislinien. Auf diesen Kreislinien sind die beiden Brechungsindizes gleich, es liegt Phasenanpassung vor.

Wird ein Lichtstrahl als primärer Laserstrahl in einen Kristall gesandt, so wandert auf dem Weg durch den Kristall der erzeugte frequenzvervielfachte Strahl zunehmend seitlich in der Hauptschnittebene von dem Verlauf der primärer Laserstrahl ab. Dieser "Walk-off-Effekt" genannte Vorgang ist je nach Kristallmaterial unterschiedlich stark ausgeprägt. Er wird durch einen Walk-off-Winkel, das ist der Winkel zwischen der primärer Laserstrahl und dem frequenzvervielfachten Strahl, quantifiziert. Der Walk-off-Effekt führt auch dazu, daß der Querschnitt des frequenzvervielfachten Strahls beim Austritt aus dem Kristall elliptisch verformt ist, wobei die große Halbachse der Ellipse in der Hauptschnittebene des Kristalls liegt. Beim Austritt aus dem nichtlinearen Kristall erfährt der frequenzvervielfachte Strahl eine Brechung, die ihn parallel zu dem primären Laserstrahl weiterlaufen läßt.

Da die Winkelabweichung zwischen dem primären Laserstrahl und dem frequenzvervielfachten Strahl und die räumliche Trennung beider Strahlen die Effektivität der Frequenzvervielfachung mindern, wurde bisher für den nichtlinearen Kristall ein Material mit möglichst kleinem Walk-off-Winkel gewählt und/oder die Länge des Kristalls auf möglichst hohe Effektivität der Frequenzvervielfachung optimiert.

Erfindungsgemäß wird zur Verminderung der ersten und zweiten Rauschquelle genau im Gegenteil ein Kristall mit angemessen großem Walk-off-Winkel gewählt. Damit wird eine weite räumliche Trennung des primären Laserstrahls von dem frequenzvervielfachten Strahl und damit auch der beiden in entgegengesetzte Richtung laufenden frequenzvervielfachten Strahlen erreicht. Die Effektivität der Frequenzvervielfachung wird über die Länge des nichtlinearen Kristalls optimiert. Als Material für den nichtlinearen Kristall können z.B. Kaliumniobat KNbO₃, Lithiumniobat LiNbO₃, Beta-Bariumborat BBO oder Lithiumborat LBO oder weitere bekannte Materialien eingesetzt werden. Die räumliche Trennung der Strahlen wird dadurch erzielt, daß die Ausbreitungsrichtung des primären Laserstrahls von der des frequenzvervielfachten Strahls innerhalb des nichtlinearen Kristalls um den Walk-off-Winkel abweicht. Mit zunehmender Länge des nichtlinearen Kristalls nimmt der seitliche Versatz der Mittelpunkte der beiden Strahlquerschnitte zu.

Der am Auskoppelspiegel reflektierte primäre Laserstrahl erzeugt, wie schon beschrieben, bei seinem Durchgang durch den nichtlinearen Kristall einen zweiten, dem ersten entgegen laufenden frequenzvervielfachten Strahl. Ohne den Walk-off-Effekt würden sich die beiden frequenzvervielfachten Strahlen voll überdecken und miteinander wechselwirken. Interferenzen, stehenden Wellen und sonstige unerwünschte Effekte, die zum Rauschen des Lasers beitragen, wären die Folge (erste und zweite Rauschquelle). Der Walk-off-Effekt bewirkt, daß der in die eine Richtung laufende frequenzvervielfachte Strahl gegenüber dem primären Laserstrahl in eine Richtung seitlich abgelenkt wird, und der in die Gegenrichtung laufende frequenzvervielfachte Strahl gegenüber dem primären Laserstrahl in die andere Richtung seitlich abgelenkt wird. Dadurch werden die beiden frequenzvervielfachten Strahlen räumlich voneinander und von dem primären Laserstrahl getrennt und können nicht mehr miteinander wechselwirken. Die Auswirkungen der ersten und zweiten Rauschquelle werden somit vermieden oder zumindest stark vermindert.

In dem nichtlinearen Kristall kann durch Verlust der Phasenrelation (nichtperfekter Kristall) auch Rückkonversion des frequenzvervielfachten Strahls erfolgen, so daß z.B. erzeugtes frequenzverdoppeltes Licht mit der Frequenz 2v wieder in seine ursprünglichen Bestandteile ν + ν zurückgewandelt wird. Durch die räumliche Trennung der Strahlen wird eine Wechselwirkung des rückkonvertierten Lichts mit dem primären Strahl stark reduziert und so die Auswirkungen dieser Rauschquelle stark vermindert.

In einer anderen Ausführungsform der Erfindung wird als zusätzlicher Separator ein zusätzliches Bauteile in Form z.B. eines Prismas oder eines Keils im Resonator zwischen dem nichtlinearen Kristall und dem Auskoppelspiegel angeordnet. Diese Ausführungsform vermindert die Auswirkungen der dritten Rauschquelle. Der Separator bewirkt die räumliche Trennung des primären Laserstrahls von dem am Auskoppelspiegel zurückreflektierten Anteil des frequenzvervielfachten Strahls durch Dispersion. Da sich die Wellenlänge des primären Laserstrahls und des frequenzvervielfachten Strahls mindestens um einen Faktor 2 unterscheiden, ist durch Dispersion eine effektive Trennung der beiden Strahlen möglich. Damit eine Dispersionswirkung eintreten kann, muß die Eintrittsfläche und/oder die Austrittsfläche des Separators einen von 90° verschiedenen Winkel mit den beiden Strahlen einschließen. Optimal ist der Winkel, bei dem die Dispersionswirkung am stärksten ist. Der Auskoppelspiegel wird so angeordnet, daß der primäre Laserstrahl in sich selbst zurückläuft. Der frequenzvervielfachte Strahl wird dann nicht in sich selbst zurückreflektiert und auf diese Weise wird eine Wechselwirkung des primären Laserstrahls mit Licht, das von dem zurückreflektierten Anteil des frequenzvervielfachten Strahls in Licht mit der Grundwellenlänge zurückkonvertiert wird, vermieden. Ebenso wird Interferenz des frequenzvervielfachten Strahls mit seinem am Auskoppelspiegel zurückreflektierten Anteil vermieden.

Die räumlichen Trennung der beiden Strahlen kann auch durch die kombinierte Wirkung von Walk-off-Effekt und Dispersion erzielt werden. Dazu kann zusätzlich zu einem nichtlinearen Kristall, der durch den Walk-off-Effekt eine räumliche Trennung der Strahlen herbeiführt, ein durch Dispersion wirksamer Separator im Resonator angeordnet werden.

In einer weiteren Ausführungsform der Erfindung wird als zusätzlicher ein Polarisator als zusätzliches Bauteil oder kombiniert mit einem anderen Bauteil im Resonator vorgesehen. Auch diese Ausführungsform vermindert die Auswirkungen der dritten Rauschquelle. Der Polarisator wirkt für den primären Laserstrahl als Halbwellen- oder Vollwellen-Phasenverzögerer (λ/2-Platte oder λ-Platte) und für die frequenzvervielfachte Welle idealer weise als Viertelwellen-Phasenverzögerer (λ/4-Platte). Der am Auskoppelspiegel reflektierte primäre Laserstrahl hat, wenn er den nichtlinearen Kristall wieder erreicht, den Polarisator zweimal durchlaufen und liegt dann in seiner ursprünglichen Polarisationsrichtung vor. Der frequenzvervielfachte Strahl hingegen hat nach zweimaligem Durchlaufen des Polarisators seine Polarisationsrichtung bei Einsatz eines Viertelwellen-Phasenverzögerers um 90° gedreht. Dadurch ist es für den frequenzvervielfachten Strahl weder möglich, in dem nichtlinearen Kristall Licht der Grundwellenlänge durch Rückkonversion zu erzeugen noch mit dem in die andere Richtung laufenden frequenzvervielfachten Strahl zu interferieren.

Der am Auskoppelspiegel reflektierte primäre Laserstrahl erzeugt, wie schon beschrieben, bei seinem Durchgang durch den nichtlinearen Kristall einen frequenzvervielfachten Strahl, der sich von dem nichtlinearen Kristall in Richtung auf das Lasermedium ausbreitet. In dem Lasermedium wirkt der frequenzvervielfachte Strahl als zusätzliches Pumplicht, das Fluktuationen des Lasers deutlich verstärken kann. Durch den "walk-off" zwischen fundamentaler und frequenzverdoppelter Welle besteht die Möglichkeit, einen signifikanten Anteil des frequenzverdoppelten Lichtes auszublenden, ohne die fundamentale Welle und damit die Resonatorgüte zu beeinflussen. Wird zwischen dem nichtlinearen Kristall und dem Lasermedium eine Blende geeignet angebracht, so daß sie den primären Laserstrahl unbeeinflußt läßt, den von dem nichtlinearen Kristall in Richtung auf das Lasermedium sich ausbreitenden frequenzvervielfachten Strahl aber weitgehend ausblendet, so werden die beschriebenen negativen Effekte vermieden.

Eine weitere Möglichkeit, zusätzliches Pumpen zu vermeiden besteht darin, einen gefalteten Resonator zu verwenden. Dazu wird zwischen dem Lasermedium und dem nichtlinearen Kristall die optische Achse des Resonators durch einen Spiegel, der für den primären Laserstrahl hochreflektierend, für den frequenzvervielfachten Strahls hingegen hochtransparent beschichtet ist, umgelenkt. Auf diese Weise gelangt frequenzvervielfachtes Licht nicht in das Lasermedium.

In einem erfindungsgemäßen Laser, bei dem eine der oben angesprochenen mehreren Maßnahmen betroffen sind, um die Effekte der ersten, der zweiten und der dritten Rauschquelle zu verringern, ist die vierte Rauschquelle zumindest von lediglich sekundärer Bedeutung und kann im Endeffekt unberücksichtigt bleiben. Dies wird an einem weiter unten diskutierten Beispiel demonstriert.

Die Erfindung wird anhand von Ausführungsbeispielen und der Zeichnung erläutert. Es zeigen:
- Fig. 1: einen Laser mit einem nichtlinearen Kristall, der auch als Separator dient,
- Fig. 2: die Intensitätsverteilung des primären Laserstrahls und des frequenzvervielfachten Strahls längs einem Querschnitt durch beide Strahlen,
- Fig. 3.: einen Laser mit einem durch Dispersion wirksamen Separator,
- Fig. 4.: einen Laser mit einem durch Polarisation wirksamen Separator und
- Fig. 5.: einen Laser mit einem gefalteten Resonator.

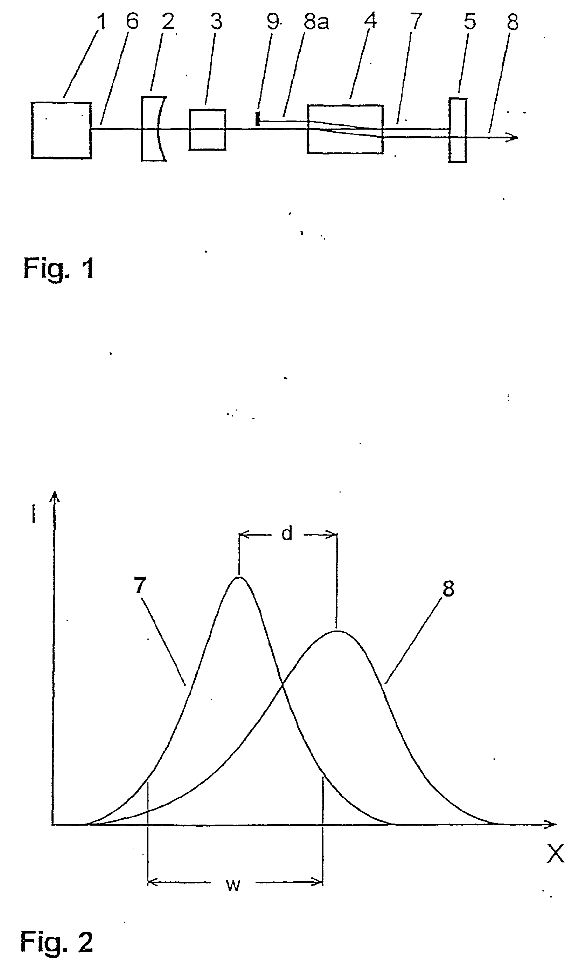

Der in Fig. 1 dargestellte endgepumpte Laser ist aus einer Laserdiode als Pumpquelle 1 und einem Resonator aufgebaut. Es kann auch jede andere geeignete Pumpquelle verwendet werden, und der Laser kann auch seitlich gepumpt sein. Der Resonator besteht aus einem ersten Spiegel, der als Einkoppelspiegel 2 dient, einem Lasermedium 3, einem nichtlinearen Kristall 4 und einem zweiten Spiegel, der als Auskoppelspiegel 5 dient: Das Licht 6 der Pumpquelle 1 gelangt durch den hierfür hochtransparenten Einkoppelspiegel 2 in das Lasermedium 3 und regt dieses zum Aussenden von primärer Laserstrahlung 7 an, für die der Einkoppelspiegel 2 hochreflektierend ist. Als Lasermedium 3 kann beispielsweise Nd:YAG, Nd:YLF, Nd:YVO₄, Cr:LiSAF, Tu:YAG oder jedes andere, für diesen Zweck einsetzbare Material dienen. Der nichtlineare Kristall 4 dient in diesem Beispiel als Frequenzverdoppler, die Erfindung kann aber genauso mit einer Kombination mehrerer nichtlinearer Kristalle, die dann höhere Vielfache der primären Laserstrahlung 7 erzeugen, eingesetzt werden. Als nichtlinearer Kristall 4 wird in diesem Beispiel kritisch phasenangepaßtes Kaliumniobat KNbO₃, welches einen starken Walk-off-Effekt hat, eingesetzt, andere bekannte Materialien (z.B. LiNbO₃ oder LBO) sind aber auch einsetzbar. In dem nichtlinearen Kristall 4 entsteht aus dem primären Laserstrahl 7 (z.B. infrarotes Licht) ein frequenzverdoppelter Strahl 8 (z.B. grünes Licht). Der Auskoppelspiegel 5 ist für den frequenzverdoppelten Strahl 8 hochtransparent, so daß dieser aus dem Laser austritt, für den primären Laserstrahl 7 ist er hochreflektierend.

Die beiden Laserstrahlen 7 und 8 schließen in dem nichtlinearen Kristall 4 einen Winkel miteinander ein, der gleich dem Walk-off-Winkel des nichtlinearen Kristalls 4 ist. Um die zu beschreibenden Effekte deutlicher darstellen zu können, ist der Walk-off-Winkel in der Zeichnung stark vergrößert dargestellt. Beim Verlassen des nichtlinearen Kristalls 4 erfährt der frequenzvervielfachte Strahl 8 eine Brechung und läuft parallel zu dem primären Laserstrahl 7 weiter. Beim Auftreffen auf den Auskoppelspiegel 5 wird der frequenzvervielfachte Strahl 8 fast vollständig durchgelassen und verläßt den Laser. Der primäre Laserstrahl 7 wird fast vollständig in sich selbst zurück reflektiert und erzeugt beim erneuten Durchgang durch den nichtlinearen Kristall 4 einen weiteren frequenzvervielfachten Strahl 8a, der in die entgegengesetzte Richtung wie der erste (8) läuft. Durch den Walk-off-Effekt wird der erste frequenzvervielfachte Strahl 8 in eine Richtung (in der Zeichnung nach unten) seitlich von den primären Laserstrahl 7 abgelenkt. Der zweite frequenzvervielfachte Strahl 8a wird in die entgegen-gesetzte Richtung (in der Zeichnung nach oben) abgelenkt. Dadurch werden die beiden frequenzvervielfachten Strahlen 8, 8a optimal voneinander und auch von dem primären Laserstrahl 7 getrennt.

Um zu verhindern, daß der frequenzvervielfachte Strahl 8a in das aktive Lasermaterial 3 eintritt und dieses auf unerwünschte Weise pumpt, ist eine Blende 9 vorgesehen, die den frequenzvervielfachten Strahl 8a blockiert, den primären Laserstrahl 7 aber unbeeinflußt läßt.

Fig. 2 zeigt das Intensitätsprofil des primären Laserstrahls 7 und des frequenzvervielfachten Strahls 8 längs eines Querschnitts durch die beiden Strahlen im Bereich zwischen dem nichtlinearen Kristalls 4 und dem Auskoppelspiegel 5. Über der räumlichen Achse x, die quer zur Richtung der Strahlen verläuft, ist die Intensität I der Strahlen aufgetragen. Die Entfernung d der beiden Maxima der Intensitätsprofile entspricht etwa 50% des Strahldurchmessers w des primären Laserstrahls 7.

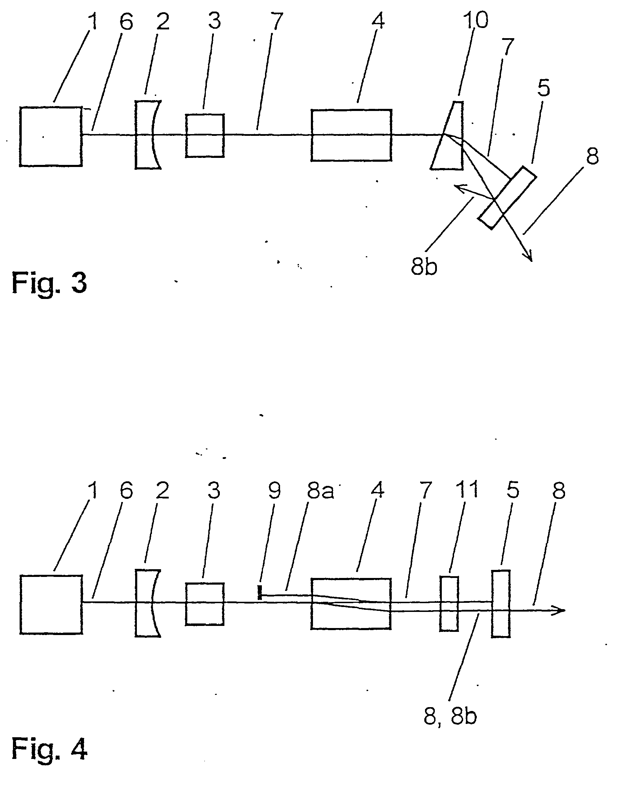

Fig. 3 zeigt einen Laser, bei dem die dritte Rauschquelle vermindert wird. Die Anordnung der Bauteile 1, 2 und 3 und deren Funktion ist die gleiche wie in Fig. 1. Der nichtlinearen Kristall 4 kann für seine Aufgabe der Frequenzvervielfachung optimiert sein und somit die Strahlen 7 und 8 kaum räumlich voneinander trennen oder er kann wie in Fig. 1 zur optimalen räumlichen Trennung der Strahlen ausgelegt sein. Der übersichtlicheren Darstellung halber werden die Strahlen 7 und 8 hinter dem nichtlinearen Kristall 4 als räumlich nicht voneinander getrennt dargestellt. Zwischen dem nichtlinearen Kristall 4 und dem Auskoppelspiegel 5 ist ein Prisma 10 angeordnet. Der primäre Laserstrahl 7 und der frequenzvervielfachte Strahl 8 werden unterschiedlich stark von dem Prisma 10 gebrochen. Der Auskoppelspiegel 5 ist so angeordnet, daß er den primären Laserstrahl 7 in sich selbst zurückreflektiert. Der von dem Auskoppelspiegel 5 reflektierte Anteil 8b des frequenzvervielfachten Strahls 8 wird unter einem Winkel reflektiert, der ihn weit von dem primären Laserstrahl 7 und dem frequenzvervielfachten Strahl 8 entfernt. Die als dritte Rauschquelle beschriebenen Effekte werden dadurch verhindert.

Ein Laser nach Fig. 3 mit einem nichtlinearen Kristall wie in Fig. 1 beschrieben kombiniert die Effekte die zur Verminderung der ersten, zweiten und dritten Rauschquelle dienen.

In Fig. 4 ist ein Laser dargestellt, der genauso aufgebaut ist wie der in Fig. 1 dargestellte Laser mit dem einzigen Unterschied, daß zwischen dem nichtlinearen Kristall 4 und dem Auskoppelspiegel 5 ein Polarisationsdreher 11 angeordnet ist. Der Polarisationsdreher 11 ist aus einem doppelbrechenden Material mit Dispersion wie z.B. Quarz gefertigt und wirkt für den primären Laserstrahl 7 als Halbwellen- oder Vollwellen-Phasenverzögerer (λ/2-Platte oder λ-Platte). Das bewirkt, daß der primäre Laserstrahl 7 nach der Reflexion am Auskoppelspiegel 5 und erneutem Durchgang durch den Polarisationsdreher 11 mit seiner ursprünglichen Polarisationsrichtung in den nichtlinearen Kristall 4 eintritt. Für den am Auskoppelspiegel 5 reflektierten Anteil 8b des frequenzvervielfachten Strahls wirkt der Polarisationsdreher 11 nicht als λ/2-Platte oder λ-Platte. Er tritt daher mit einer anderen Polarisationsrichtung in den nichtlinearen Kristall 4 ein, als der frequenzvervielfachte Strahl 8 diesen verlassen hat. Durch die Drehung der Polarisationsrichtung wird die Interferenz des in die eine Richtung laufenden frequenzvervielfachten Strahls mit dem in die Gegenrichtung laufenden (dritte Rauschquelle) verhindert.

Die Rückkonversion von frequenzvervielfachtem Licht in Licht der Grundwellenlänge, geschieht nur bei passender Polarisationsrichtung des eingestrahlten Lichts. Im allgemeinen tritt der am Auskoppelspiegel 5 reflektierte Anteil 8b des frequenzvervielfachten Strahls 8 als elliptisch polarisiertes Licht in den nichtlinearen Kristall 4 ein. Nur der in der passenden Richtung polarisierte Anteil des Lichts kann für die Rückkonversion wirksam werden. Im Idealfall wirkt der Polarisationsdreher 11 für den frequenzvervielfachten Strahl als Viertelwellen-Phasenverzögerer. Nach zweimaligem Durchlaufen des Polarisationsdrehers 11 ist dann die Polarisationsrichtung des am Auskoppelspiegel 5 reflektierten Anteils 8b des frequenzvervielfachten Strahls gegenüber der ursprünglichen Polarisationsrichtung um 90° gedreht und kann überhaupt nicht mehr für die Rückkonversion wirksam werden. Die Rückkonversion des am Auskoppelspiegel 5 reflektierten Anteils 8b des frequenzvervielfachten Strahls hat einen Anteil an der zweiten Rauschquelle. Dieser Anteil wird von dem Polarisationsdreher 11 vermindert.

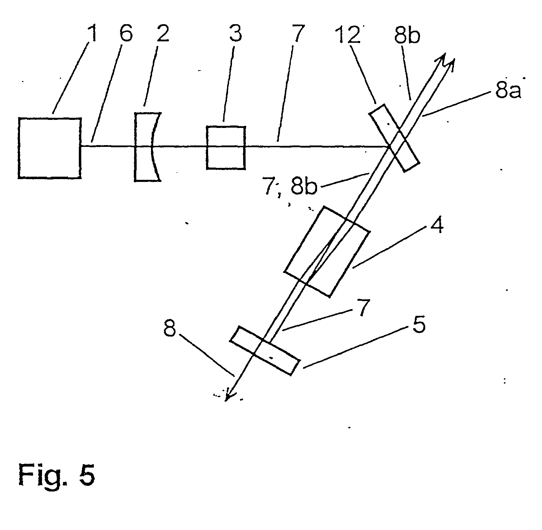

In Fig. 5 ist ein Laser dargestellt, der fast genauso wie der in Fig. 1 dargestellte Laser aufgebaut ist. Es fehlt jedoch die Blende 9, stattdessen ist zwischen dem Lasermedium 3 und dem nichtlinearen Kristall 4 ein Spiegel 12 derart angeordnet, daß die optische Achse des Resonators gefaltet wird. Der Spiegel 12 ist für den primären Laserstrahlen 7 hochreflektierend beschichtet, für den frequenzvervielfachten Strahl 8, 8a, 8b hingegen hochtransparent beschichtet. Der am Auskoppelspiegel 5 reflektierte Anteil 8b des frequenzvervielfachten Strahls 8 und das im nichtlinearen Kristall 4 durch den primären Laserstrahl 7 auf dem Weg vom Auskoppelspiegel 5 zum nichtlinearen Kristall 4 in diesem erzeugte frequenzvervielfachte Licht 8a verläßt den Resonator durch den Spiegel 12 und kann somit nicht das Lasermedium 3 auf unerwünschte Weise pumpen.

Bei einem Beispiel eines Lasers mit dem in Figur 1 gezeigten Aufbau bestand die Pumplichtquelle 1 aus einem Diodenlaser mit einer Ausgangsleistung von zwei Watt (2 W) bei einer Wellenlänge von 808 nm. Der Spiegel 2 besaß einen konkaven Krümmungsradius von siebzig Millimetern (70 mm), der Auskoppelspiegel 5 war ein Planspiegel. Der Abstand zwischen den Spiegeln 2 und 5 betrug 60 mm, das heißt der Resonator hatte eine Länge von 60 mm. Das Lasermedium 3 war Nd: YVO₄ und lieferte eine Grundwellenlänge von 1064 nm. Der optisch nicht-lineare Kristall 4 war ein kritisch phasenangepaßtes KNbO₃ mit einem Walk-Off-Winkel von siebzehn Milliradian (17 mrad). Die Blende 9 befand sich in einer Entfernung von 10 mm von dem optisch nichtlinearen Kristall.

Als dieser Laser gemäß einer Ausführungsform der Erfindung mit acht Longitudinalmoden betrieben wurde, lieferte der Laser etwa 0,25 W Licht mit einer Wellenlänge von 532 nm bei einem effektiven Rauschen von weniger als 0,1 %. Ähnliche Ergebnisse wurden erzielt, als der Laser mit im zeitlichen Mittel 12-18 Moden betrieben wurde. Zum Vergleich: als derselbe Resonator mit nicht-kritisch angepaßtem LBO ohne Walk-Off-Winkel als optisch nicht-linearer Kristall 4 verwendet wurde, wobei auch die Blende 9 fehlte, ergab sich bei dem Ausgangssignal einer Wellenlänge von 532 nm ein effektiver Rauschwert von 15 % und darüber.

## Patentansprüche

1. Laser, bestehend aus einer Pumpquelle (1) und einem Resonator mit einer optischen Achse, längs der mindestens ein erster Spiegel (2), ein Lasermedium (3) zur Erzeugung eines primären Laserstrahls (7), ein nichtlinearer Kristall (4) zur Erzeugung eines frequenzvervielfachten Strahls (8) und ein zweiter, als Auskoppelspiegel (5) dienender Spiegel hintereinander angeordnet sind, wobei ein Separator (4, 10, 11) zur Trennung des primären Laserstrahls (7) von dem frequenzvervielfachten Strahl (8) vorgesehen ist, **dadurch gekennzeichnet, daß** als Separator der nichtlineare Kristall (4) dient, der aus einem Material mit Walk-off-Effekt gefertigt ist und in Abhängigkeit von der Stärke seines Walk-off-Effekts so lang ausgebildet ist, daß der primäre Laserstrahl (7) und der frequenzvervielfachte Strahl (8) beim Austritt aus dem nichtlinearen Kristall (4) durch den Walk-off-Effekt um mindestens etwa 25 % des Strahldurchmessers (w) des primären Laserstrahls (7) räumlich getrennt sind.

2. Laser nach Anspruch 1, **dadurch gekennzeichnet, daß** ein Prisma (10) so zwischen dem Auskoppelspiegel (5) und der dem Lasermedium (3) abgewandten Seite des nichtlinearen Kristalls (4) angeordnet ist, daß das Lot auf mindestens einer der Seitenflächen des Prismas (10) mit der optischen Achse des Resonators einen von Null verschiedenen Winkel einschließt.

3. Laser nach Anspruch 1, **dadurch gekennzeichnet, daß** ein Polarisationsdreher (11) zwischen dem Auskoppelspiegel (5) und der dem Lasermedium (3) abgewandten Seite des nichtlinearen Kristalls (4) angeordnet ist, der für den primären Laserstrahl (7) als Halbwellen- oder Vollwellen-Phasenverzögerer wirkt, für den frequenzvervielfachten Strahl (8) hingegen nahezu oder genau als Viertelwellen-Phasenverzögerer wirkt.

## Claims

1. A laser comprising a pumping source (1) and a resonator with an optical axis having disposed therealong at least a first mirror (2), a laser medium (3) for generating a primary laser beam (7), a nonlinear crystal (4) for generating a frequency-multiplied beam (8) and a second mirror serving as an output coupler (5), with a separator (4, 10, 11) being provided for separating the primary laser beam (7) from the frequency-multiplied beam (8), **characterized in that** the separator used is the nonlinear crystal (4) which is made of a material having a walk-off effect and is configured to have a length such that, in dependence on the strength of its walk-off effect, the primary laser beam (7) and the frequency-multiplied beam (8) are spatially separated by at least about 25% of the beam diameter (w) of the primary laser beam (7) due to the walk-off effect upon exiting the nonlinear crystal (4).

2. The laser according to claim 1, **characterized in that** a prism (10) is disposed between the output coupler (5) and the side of the nonlinear crystal (4) facing away from the laser medium (3) such that the perpendicular to at least one of the side faces of the prism (10) encloses a non-zero angle with the optical axis of the resonator.

3. The laser according to claim 1, **characterized in that** a polarization rotator (11) is disposed between the output coupler (5) and the side of the nonlinear crystal (4) facing away from the laser medium (3), said rotator acting as a half-wave or full-wave phase delay element for the primary laser beam (7), but nearly or exactly as a quarter-wave phase delay element for the frequency-multiplied beam (8).

## Revendications

1. Laser composé d'une source de pompage (1) et d'un résonateur avec un axe optique, le long duquel au moins un premier miroir (2), un milieu laser (3) pour la génération d'un faisceau laser primaire (7), un cristal non linéaire (4) pour la génération d'un faisceau à multiplication de fréquence (8) et un second miroir servant de miroir de déclenchement (5) sont disposés les uns derrière les autres, dans lequel il est prévu un séparateur (4, 10, 11) pour la séparation entre le faisceau laser primaire (7) et le faisceau à multiplication de fréquence (8), **caractérisé en ce que** le cristal non linéaire (4) sert de séparateur, lequel cristal est fabriqué dans un matériau avec un effet « walk-off » (double réfraction) et dont la longueur en fonction de l'intensité de son effet « walk-off » est calculée de telle manière que le faisceau laser primaire (7) et le faisceau à multiplication de fréquence (8) sont séparés dans l'espace d'au moins environ 25% du diamètre de faisceau (w) du faisceau laser primaire (7) par l'effet « walk-off » lors de la sortie hors du cristal non linaire (4).

2. Laser selon la revendication 1, **caractérisé en ce qu'**un prisme (10) est disposé entre le miroir de déclenchement (5) et le côté du cristal non linéaire (4) opposé au milieu laser (3) de telle manière que la ligne verticale inclut un angle différent de zéro avec l'axe optique du résonateur sur au moins l'une des faces latérales du prisme (10).

3. Laser selon la revendication 1, **caractérisé en ce qu'**un dispositif de rotation de polarisation (11) est disposé entre le miroir de déclenchement (5) et le côté du cristal non linéaire (4) opposé au milieu laser (3) qui fonctionne comme retardateur de phase demi-onde ou onde pleine pour le faisceau laser primaire (7), mais qui, par contre, fonctionne pratiquement ou exactement comme retardateur de phase quart d'onde pour le faisceau à multiplication de fréquence (8).
